# EUROPEAN PATENT APPLICATION

(11) **EP 2 056 619 A1**
(43) Date of publication of application: **06.05.2009**
(21) Application number: 07254365.5
(22) Date of filing: 05.11.2007
(51) Int. Cl.: H04Q 11/00, H04B 10/12, H04J 14/02

(54) **Passive optical network**

(71) Applicant: British Telecommunications public limited company, 81 Newgate Street London EC1A 7AJ (GB)
(72) Inventor: The designation of the inventor has not yet been filed
(74) Representative: Lidbetter, Timothy Guy Edwin

(57) **Abstract**

A passive optical network (PON) architecture in which a wavelength division multiplexing (WDM) transmission scheme is used to improve the reliability of a communications network.

## Description

The present invention relates to an optical communications network, and in particular to a passive optical network (PON) which uses a wavelength division multiplexing (WDM) transmission scheme.

The copper access network has been used for many years to provide basic telephony services. There has been a recent trend to also use the copper access network to provide broadband services, conventionally using digital subscriber line (DSL) technology. Typically this allows services having data rates of several Mbps to be supplied: the ADSL2 standard enables data rates of up to 12 Mbps and the ADSL2+ standard enables data rates of up to 24 Mbps.

One of the disadvantages of DSL is that the copper access networks that are used to support DSL were never designed to carry high speed data services. Conventional telephony services are provided using an analogue signal that occupies a few kilohertz of the available frequency spectrum and the DSL signals are transmitted at higher frequencies, alongside the analogue telephony signals. The maximum data rate that can be achieved using DSL is limited by the length of the cable between the telephone exchange and the customer, the diameter of the copper wires and the condition of the network. This can make it difficult for a DSL supplier to provide a consistent level of service to different customers.

It is expected that there will be a demand for high speed data services that can not be met by DSL-based services, for example 100 Mbps and greater. It is believed that such data services are most likely to be supplied using optical fibre in part, or all, of the access network. This may be via conventional point-to-point fibre or by passive optical networks (PONs). PONs are a well-known network architecture in which optical splitters are used to connect a single optical fibre from a telephone exchange with multiple customers, with one PON typically serving between 16 and 128 customers (although significantly greater numbers of customers may be served from a single PON). The present invention, as descried below, is concerned with the PON configuration often referred to as Fibre To The Premises [FTTP] in which the entire access network between the local exchange and the customer premises comprises optical fibre.

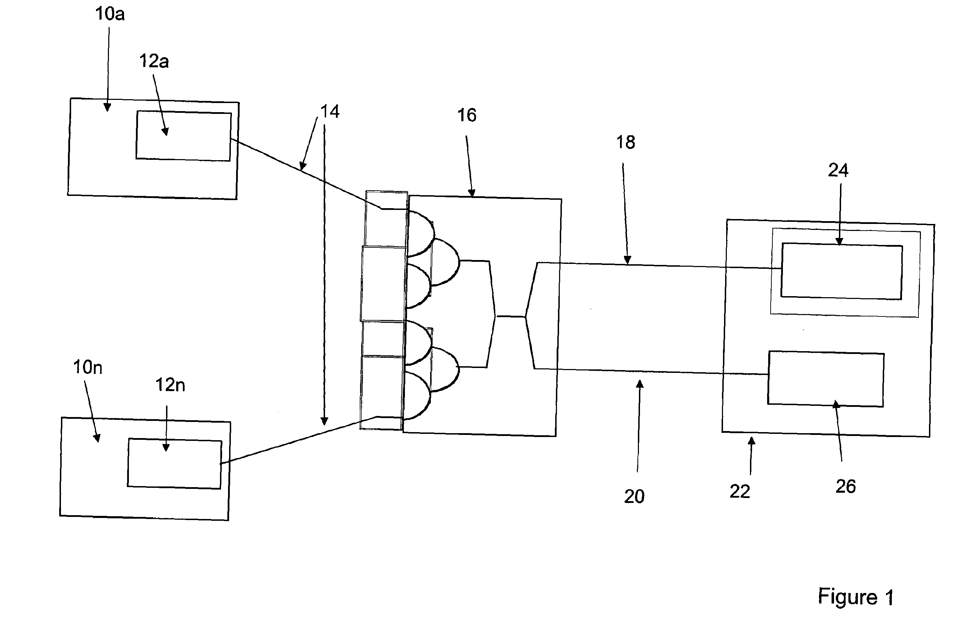

Network reliability and availability are important factors for all types of communications network. It is conventional to duplicate some aspects of network equipment and/or infrastructure in order to increase the reliability of a network. In the context of PONs, ITU-T Recommendation G.983.5 describes a number of several schemes which require the duplication of some fibre paths and/or terminal equipment in order to provide network protection. Figure 1 (which is equivalent to Figure 1 of ITU-T Recommendation G.983.5) shows a schematic depiction of such a scheme in which a plurality of customer terminals 10a,...., 10n, each comprising a respective Optical Network Terminal (ONT) 12a, ....,12n, are connected via optical fibre drops 14 to power divider 26. The optical power divider comprises n downstream ports (for connection to the n customer terminals 10) and 2 upstream ports. The upstream ports are connected to first and second Optical Line Terminals (OLTs) 24, 26: the optical power divider is connected to the first OLT via first optical fibre link 18 and the second optical splitter is connected to the second OLT via second optical fibre link 20. Both the first and the second OLT are located within telephone exchange 22. Thus, in the event that a fault were to occur on the first OLT (or a break to occur in the first optical fibre) then the network could switch over to the second OLT and the network could continue to operate.

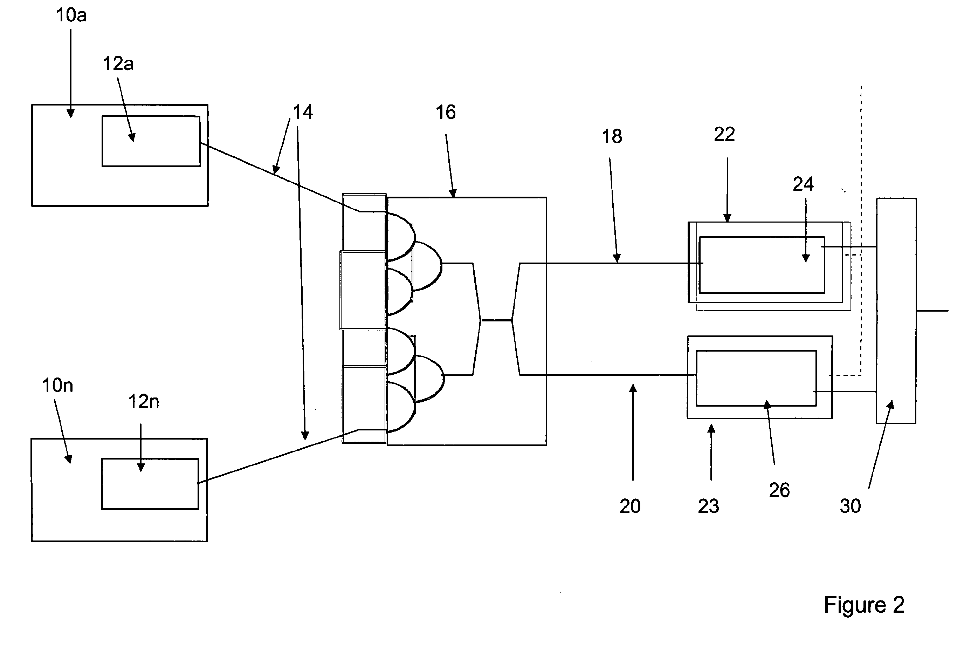

One of the disadvantages of the arrangement described above with reference to Figure 1 is that the first and second OLTs are co-located in the same telephone exchange. Thus if a fire, or other disruptive event, were to occur at that exchange (or the point that the optical fibre cables enter the exchange building) then service will be lost, despite the redundancy features designed into the network. Figure 2 shows an alternative arrangement in which the first and second OLTs 24 & 26 are located at first and second telephone exchanges 22 & 23 respectively. This arrangement is often referred to as dual-parenting (or dual-homing).

Again, in the event that a fault were to occur on the first OLT (or a break to occur in the first optical fibre) then the network could switch over to the second OLT and the network could continue to operate. Switch 30 is provided to ensure that data is routed to and from the operational OLT from further networks. Connections are provided (dashed lines) to management systems (not shown) which monitor the state of the OLTS and other network elements. When compared with the network shown in Figure 1 there is a useful increase in network reliability.

It will be appreciated that the network described above with reference to Figure 2 is not without potential points of failure. However, duplicating all of the equipment and infrastructure in a network is unlikely to ever be economically viable and thus network operators must focus their capital investment to those parts of the network that will provide the greatest reliability and performance. Different approaches to providing additional redundancy and/or reliability in PONs using WDM are disclosed in: Chan et al, "WDM PON for Next-Generation Optical Broadband Access Networks", OECC2006; Sun et al. "A Survivable WDM-PON Architecture With Centralized Alternate-Path Protection Switching for Traffic Restoration" IEEE Photonics Technology Letters, Vol. 18, No. 4, 2006, pp 631-633; and Wang *et al "A Broadcast and Select WDM-PON and its Protection".*

According to a first aspect of the present invention there is provided a passive optical network comprising a first network terminal, a second network terminal and one or more customer terminals, the or each customer terminals being in optical communication with the first network terminal via a first network route and the or each customer terminals being in optical communication with the second network terminal via a second network route, characterised in that: i) the or each customer terminals are in optical communication with the first network terminal at a first optical wavelength; and ii) the or each customer terminals are in optical communication with the second network terminal at a second optical wavelength.

Furthermore, the first network terminal may be in optical communication with the or each customer terminals at a third optical wavelength and the second network terminal may be in optical communication with the or each customer terminals at a fourth optical wavelength. One or more of the first, second, third or fourth optical wavelengths may comprise a plurality of optical wavelengths. Preferably, the first network terminal is received at a first network location and the second network terminal is received at a second network location. The or each customer terminal may comprise a first optical source for transmission at the first optical wavelength and a second optical source for transmission at the second optical wavelength; in the alternative the or each customer terminal may comprise a first optical source for transmission at the first or second optical wavelength.

According to a second aspect of the present invention there is provided a method of operating an optical communications network, the method comprising the steps of: a) providing a first optical communications route between a first network terminal and one or more customer terminals; b) providing a second optical communications route between a second network terminal and one or more customer terminals; the method being characterised by the steps of: c) communicating between the first network terminal and the one or more customer terminals at a first optical wavelength; and d) communicating between the second network terminal and the one or more customer terminals at a second optical wavelength. The method may be further characterised by the steps of: e) communicating between the one or more customer terminals and the first network terminal at a third optical wavelength; and f) communicating between the one or more customer terminals and the second network terminal at a fourth optical wavelength.

By adding Wavelength Division Multiplexing (WDM) to a PON architecture it is possible to achieve higher levels of network protection. According to the present invention, both of the OLTs may 'live' with the ONTs being protected by duplication, or by being tunable so that it can 'hop' to another pair of wavelengths in the event that one of the OLTs fail. In a network according to the present invention one of the OLTs may be in a 'hot standby' and so benefit from ability to carry extra traffic and to demonstrate to a customer that the protection scheme is in operation.

A further advantage of the present invention over known network architectures is that it is possible to avoid having to 'range-up' in the event that an OLT fails, which saves much complexity for the network management system.

A further advantage of a network according to the present invention is that customers who require the additional protection conferred by the present invention will use an appropriate ONT, whereas customers who do not require the additional protection can use a conventional ONT and not receive the benefits provided by the present invention. This allows a network operator to upgrade a PON to incorporate the present invention without needing to upgrade the ONTs of customer who do not require the additional protection.

According to a third aspect of the present invention there is provided a customer terminal for a passive optical network comprising an optical transmitter and being configured, in use, to: i) transmit optical signals to a first network terminal via a first network route; ii) transmit optical signals to a second network terminal via a second network route; characterised in that: iii) the signals transmitted to the first network terminal are transmitted at a first optical wavelength; and ii) the signals transmitted to the second network terminal are transmitted at a second optical wavelength.

The invention will now be described with reference to the following Figures, which are provided by way of example only, in which:
Figure 1 shows a schematic depiction of a prior art PON architecture;
Figure 2 shows a schematic depiction of a prior art PON architecture comprising dual-parenting;
Figure 3 shows a schematic depiction of a PON architecture according to the present invention;
Figure 4 shows a schematic depiction of an alternative embodiment of a PON architecture according to the present invention; and
Figure 5 shows a schematic depiction of a further alternative embodiment of a PON architecture according to the present invention.

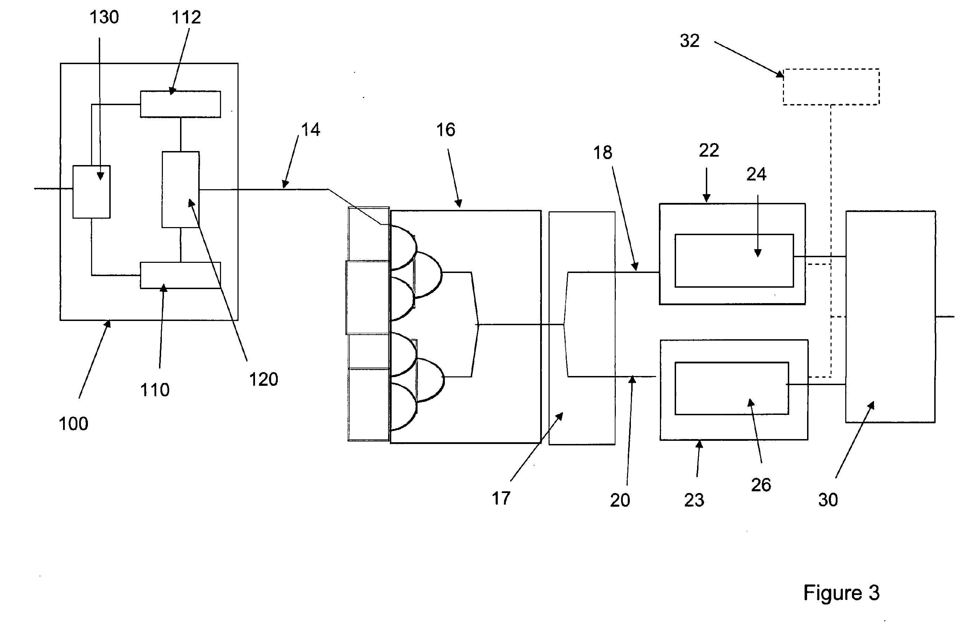

Figure 3 shows a schematic depiction of a PON architecture according to the present invention in which the passive optical network comprises a plurality of customer terminals 100 which are connected to the downstream legs of an optical splitter 16 (for the sake of clarity, only a single customer terminal 100 is shown in Figure 3), via a respective optical fibre drop 14. The upstream leg of the optical splitter is connected to a Wavelength Division Multiplexing (WDM) coupler 17, which is in turn connected to first and second OLTs 24, 26 via respective first and second optical fibre links 18, 20. First and second OLTs 24, 26 are housed in respective first and second exchange buildings 22 & 23. Switch 30 is provided to ensure that data is routed to and from the operational OLT from further networks. Connections are provided (dashed lines) to management systems 32 which monitor the state of the OLTs and other network elements.

Each of the customer terminals 100 comprise first and second ONTs 110, 112, WDM coupler 120 and switch 130. In operation, the first ONT 110 will communicate with the first OLT 24 and the second ONT 112 will communicate with the second OLT. A first wavelength λ₁ will be assigned to communications between the first OLT and the first ONT and a second wavelength λ₂ will be assigned to communications between the first ONT and the first OLT. Similarly, a third wavelength λ₃ will be assigned to communications between the second OLT and the second ONT and a fourth wavelength λ₄ will be assigned to communications between the second ONT and the second OLT. The WDM couplers 17 and 120 are designed to route the appropriate wavelengths to and from the ONTs and OLTs with which they are associated. In operation, both of the OLTs transmit data to the ONTs (and vice versa) such that the protection scheme provides a duplicated set of signals, with each set being-carried on their associated wavelengths. In the event of equipment failure, or a break in the network, then the switches 30 and 130 ensure that data is passed to the working network path.

An advantage of such an arrangement is that the standby OLT and ONT do not need to perform the 'ranging-up' procedure. This start-up procedure is used in most TDMA PONs (such as G-PON) and ensures that upstream time-slots from different ONTs do not collide. To facilitate this the OLT typically sends a downstream pulse in the form of short administrative packet which address one ONT. This ONT immediately responds with an 'echo'. The OLT measures the round-trip delay and uses the delay value to set a variable time delay counter in that ONT. Each ONT is ranged up separately. The whole procedure can take several minutes to perform.

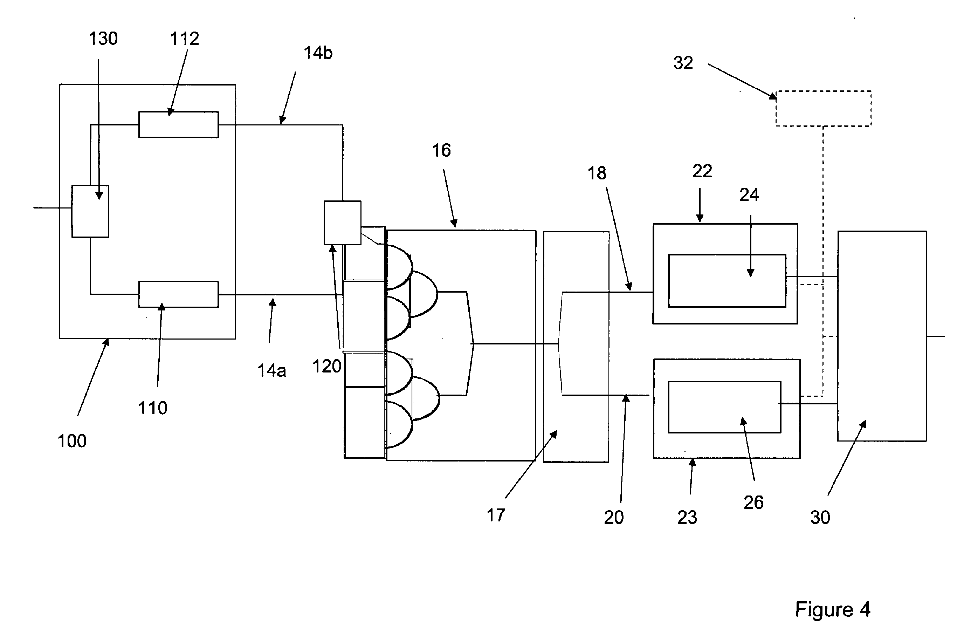

Figure 4 shows a schematic depiction of an alternative embodiment of a PON architecture according to the present invention. In this case, the WDM coupler previously located in the customer terminal is moved to be nearer to (or co-located with) the optical splitter 16. The WDM is connected to the first and second ONTs via first and second optical fibre drops 14a, 14b respectively. The network operates in the same manner as described above with reference to Figure 3, with the exception that the customer terminal now has duplicated optical fibre drops to provide a connection to the network, thus eliminating a potential point of failure.

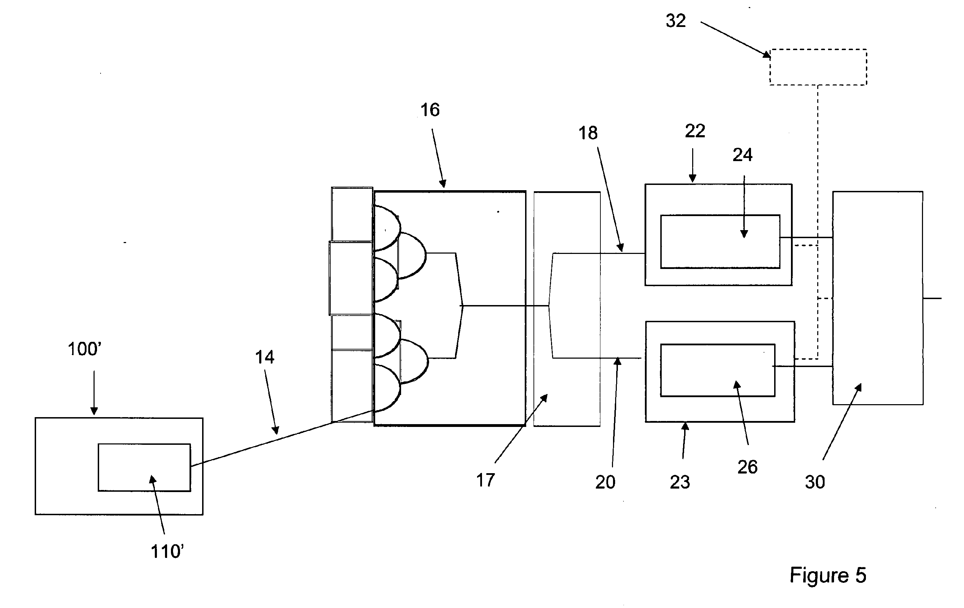

Figure 5 shows a schematic depiction of a further alternative embodiment of a PON architecture according to the present invention. The customer terminals 100' disclosed in this arrangement comprise a single ONT 110'. The ONT 110' is tunable such that it is able to operate at wavelengths λ₁ & λ₂ when communicating with the first OLT 24 and at wavelengths λ₃ & λ₄ when communicating with the second OLT 26. It will be appreciated that the tuneable ONT is able to filter out (or otherwise ignore) the signals transmitted by the hot standby OLT. In order that the hot standby OLT can become operational as soon as is possible following the failure of the main OLT, it is necessary to avoid performing the 'ranging-up' process at that time. This may be achieved by determining appropriate time delay values for each ONT at start-up. Two sets of parameters can then be stored to enable a fast changeover between OLTs in the event of failure.

It will be readily apparent to those skilled in the art that not all customers connected to a PON according to the present invention would require an ONT capable of receiving and transmitting at the different wavelengths utilised by the two OLTs. For example, a conventional G-PON ONT (i.e. one conforming to ITU Recommendation 984.5) can be configured to receive the wavelength transmitted by the primary OLT (and will incorporate a filter that can block the signals transmitted by the secondary OLT) and to transmit signals back to the OLT at the appropriate wavelength. In the event that the primary OLT (or the network transmitting the primary OLT) were to fail then such a conventional ONT would not receive any signals from the PON. Service would only be resumed once the primary OLT recommenced operating (or the network fault was fixed).

It will be appreciated that further variations may be made to the arrangements described above with regard to Figures 3, 4 & 5 without departing from the scope of the present invention. For example, WDM 120 may be replaced with an optical splitter as long as the connected equipment is able to filter out other wavelengths that are not intended for it. Furthermore, it will be understood that the references to the WDM wavelengths λ₁, λ₂, λ₃ & λ₄ may refer to a single discrete wavelength or a plurality of WDM (or DWDM) wavelengths associated with a particular OLT & ONT. It will be understood that the tuneable ONT described above with reference to Figure 5 may be provided with dual optical fibre drops (as disclosed above with reference to Figure 4) : this may require that some for of switching is provided to ensure that only one set of signals is provided to the ONT.

## Claims

1. A passive optical network comprising a first network terminal, a second network terminal and one or more customer terminals, the or each customer terminals being in optical communication with the first network terminal via a first network route and the or each customer terminals being in optical communication with the second network terminal via a second network route,
**characterised in that:**
i) the or each customer terminals are in optical communication with the first network terminal at a first optical wavelength; and
ii) the or each customer terminals are in optical communication with the second network terminal at a second optical wavelength.

2. A passive optical network according to claim 1, wherein the first network terminal is in optical communication with the or each customer terminals at a third optical wavelength.

3. A passive optical network according to claim 1 or claim 2, wherein the second network terminal is in optical communication with the or each customer terminals at a fourth optical wavelength.

4. A passive optical network according to any preceding claim wherein one or more of the first, second, third or fourth optical wavelengths comprise a plurality of optical wavelengths.

5. A passive optical network according to any preceding claim, wherein the first network terminal is received at a first network location and the second network terminal is received at a second network location.

6. A passive optical network according to any preceding claim wherein the or each customer terminal comprises a first optical source for transmission at the first optical wavelength and a second optical source for transmission at the second optical wavelength:

7. A passive optical network according to any of claims 1 to 5 wherein the or each customer terminal comprises a first optical source for transmission at the first or second optical wavelength.

8. A passive optical network according to any preceding claim wherein the network comprises an optical power divider located intermediate the network terminals and the or each customer terminal.

9. A passive optical network according to claim 8, wherein one or more customer terminals are connected to the optical power divider via two optical fibre links.

10. A method of operating an optical communications network, the method comprising the steps of:
a) providing a first optical communications route between a first network terminal and one or more customer terminals;
b) providing a second optical communications route between a second network terminal and one or more customer terminals; the method being **characterised by** the steps of:
c) communicating between the first network terminal and the one or more customer terminals at a first optical wavelength; and
d) communicating between the second network terminal and the one or more customer terminals at a second optical wavelength.

11. A method according to claim 10, being further **characterised by** the steps of:
e communicating between the one or more customer terminals and the first network terminal at a third optical wavelength; and
f) communicating between the one or more customer terminals and the second network terminal at a fourth optical wavelength.

12. A customer terminal for a passive optical network comprising an optical transmitter and being configured, in use,
i) to transmit optical signals to a first network terminal via a first network route;
ii) to transmit optical signals to a second network terminal via a second network route; **characterised in that**:
iii) the signals transmitted to the first network terminal are transmitted at a first optical wavelength; and
ii) the signals transmitted to the second network terminal are transmitted at a second optical wavelength.

13. A customer terminal according to claim 12 wherein the customer terminal comprises a first optical transmitter for transmitting, in use, at the first wavelength and a second optical transmitter for transmitting, in use, at the second wavelength.

14. A customer terminal according to claim 12 wherein the customer terminal comprises one tunable optical transmitter for transmitting, in use, at the first wavelength or the second wavelength.
